# EUROPEAN PATENT APPLICATION

(11) **EP 2 819 484 A1**
(43) Date of publication of application: **31.12.2014**
(21) Application number: 13305922.0
(22) Date of filing: 28.06.2013
(51) Int. Cl.: H04W 84/20

(54) **Method for recovering a local area network, and terminal to that end**

(71) Applicant: NEC Corporation, Minato-ku, Tokyo 108-8001 (JP)
(72) Inventor: Beaugrand, Fabrice, 92500 RUEIL MALMAISON (FR); Zappulla, Fabrice, 95600 EAUBONNE (FR); Renard, Cyril, Les Presidanes - Bat A2 78290 Croissy sur Seine (FR); Dong, Olivier, 91210 DRAVEIL (FR)
(74) Representative: Cabinet Plasseraud

(57) **Abstract**

The invention relates to a method for maintaining a local area network between several terminals, where a first terminal acts as a point of access to the network for the other terminals. According to the invention, a list of terminals which are connected to said network is ordered (S5) according to a predetermined criterion, and, in case of disconnection of said first terminal from the network (S6), the first terminal (GO) is withdrawn from the list (S8) and the remaining terminal (GM1) on top of the list is defined as the new access point to said network (S7).

## Description

The present invention relates to the technical background of short range communication between several terminals (such as mobile phones, smartphones, tablets, connected computers, etc.).

More particularly, the present invention relates to the establishment of a local area network between such terminals. In such a network, one of the terminals acts as an access point to the network for the other terminals.

However, in case of disconnection of that terminal acting as an access point, the connection to the network for the other terminals is lost. A trade-off for determining which terminal can act as a new access point is usually performed. Such a step is time consuming and furthermore consumes energy from the batteries of the terminals. Moreover, the users have to intervene for entering a password in their terminals (typically for typing a code) so as to join the network.

The present invention aims to improve the situation.

To that end, the present invention proposes a method for maintaining a local area network between several terminals, a first terminal acting as a point of access to said network for the other terminals, wherein a list of terminals which are connected to said network is ordered according to at least one predetermined criterion, and wherein, at least in case of disconnection of said first terminal from the network, said first terminal is withdrawn from the list and the remaining terminal on top of the list is defined as the new access point to said network.

Therefore, thanks to the implementation of the invention, each terminal, building the same way the aforesaid list, can determine without any further step of trade-off, whether it is intended to become a new access point for the other terminals, or, otherwise, to which terminal (acting as a new access point) it is intended to request a connection to the network, in case of disconnection of the aforesaid "first terminal".

Therefore, in an embodiment, the method can further comprise the steps, performed at a second terminal connected to said access point, of:
- at least in case of disconnection of the access point from the network, determining whether said second terminal is on the top of the list,
- and:
   - if it is, recovering said network with said second terminal as new access point,
   - if it is not, connecting to the terminal on the top of the list as new access point to the network.

In an embodiment, the method can comprise the steps, performed at each terminal, of:
- receiving from each terminal at least one parameter value,
- ordering said list of terminals on the basis of the received parameter values,
- storing said list, and,
- at least in case of a disconnection of a terminal and/or a connection of a new terminal in said network, updating said list.

Therefore, the list can be updated in each terminal with same information shared in the network between the terminals. The list updating (latest step given above) can be performed by implementing the three first steps given above, upon any disconnection of a terminal and/or a connection of a new terminal in said network, in an exemplary embodiment. In a variant, the list can be updated repetitively (for example each 30 seconds or each minute) by implementing repetitively the three first steps above. Therefore, it is to be understood from that variant that the list can be updated "*at least* in case of a disconnection of a terminal and/or a connection of a new terminal" as recited above, but also repetitively even if no new connection or disconnection of a terminal occurs in the network.

In a possible embodiment, the method can further comprise a step of initiating the network comprising the operations, performed at each current terminal, of:
- determining whether said current terminal is on the top of the list, and:
   - if it is, initiating a network with said current terminal as access point,
   - if it is not, connecting to the terminal which is on the top of the list as access point to the network.

Therefore, the invention can propose further an embodiment where the determination of the access point to initiate the network is performed by the method according to the invention. However, in a variant described in the detailed specification hereafter, a user of a terminal, willing to send data (such as a content for example) to other terminals, let his terminal initiate the network as point of access for the other terminals. In this variant, it will be understood thus that the access point, for initiating the network at the beginning, is not necessarily determined upon the aforesaid predetermined criterion, neither determined on the basis on the aforesaid list.

The method of initiating the network can further comprise the operations, performed at each current terminal, of:
- receiving from each terminal at least one parameter value,
- ordering said list of terminals on the basis of the received parameter values,
- and storing said list.

In a possible embodiment, said predetermined criterion can take into account a time spent by the terminal being connected to the network (i.e. during a same session).

Additionally or alternatively, said predetermined criterion can further take into account a battery level of the terminal being connected to the network.

Additionally or alternatively, said predetermined criterion can further take into account a signal strength of connection of the terminal to the network.

Additionally or alternatively, said predetermined criterion can further take into account an IP address value of the terminal being connected to the network.

It is to be understood thus that the aforesaid predetermined criterion can result from a combination of several criteria, examples of which are given above.

Furthermore, in the variant embodiment given above where the list can be updated repetitively (for example each 30 seconds or each minute), it is thus possible to anticipate a possible future disconnection of the access point from the network, and to designate repetitively (for example each 30 seconds or each minute, or possibly a longer period) the terminal currently at the top of the list as the new access point, even if the previous access point has not left the network yet. For example, if the aforesaid criterion or combined criteria are related to the battery level and/or to the signal strength, if it is detected that the battery level and/or the signal strength of the current access point are low, the terminal currently at the top of the list can be designated as the new access point of the network.

Therefore, it is to be understood from the recitation given above "*at least* in case of a disconnection of a terminal and/or a connection of a new terminal" applies to the embodiment where the first terminal leaving the network is replaced by a new access point, but also to the embodiment where the access point can be changed repetitively depending on which terminal is currently at the top of the ordered list.

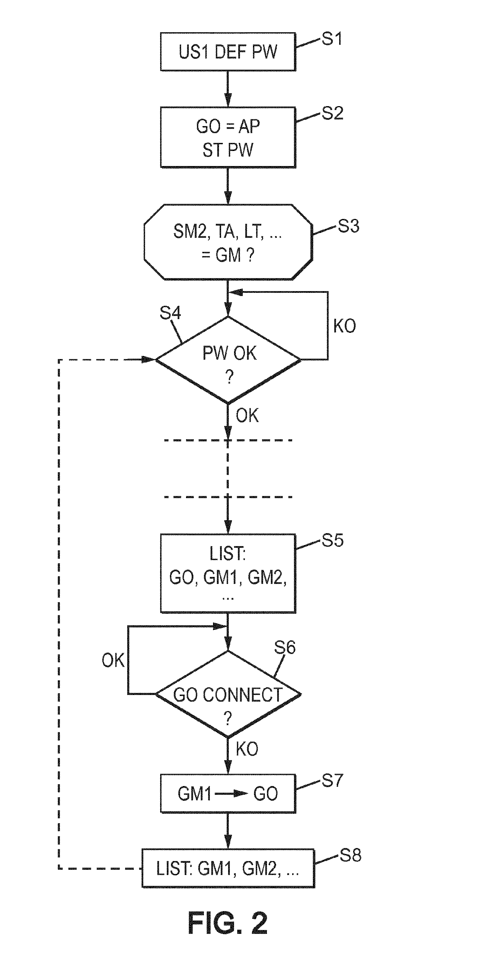

Preferably, for a connection of a current terminal to said network, the access point verifies a password sent from the current terminal. This embodiment makes it possible to retain only, in the aforesaid list, the terminals which are entitled to join the network. The present invention aims also at a computer program comprising instructions for the implementation of the method presented above, when read by a processor. An example of flow chart of the general algorithm of such a program is presented in figure 2 commented below.

The present invention aims also at a terminal for performing the method of the invention. The terminal is intended to be connected to a local area network where a first terminal is a point of access to the network for other terminals. To that end, the terminal comprises:
- a unit for storing a list of terminals connected to said network and ranked according to at least one predetermined criterion, and
- a calculation unit adapted for, at least in case of disconnection of said access point from the network, withdrawing the first terminal from the list and for defining the remaining terminal on top of the list as the new access point in said network.

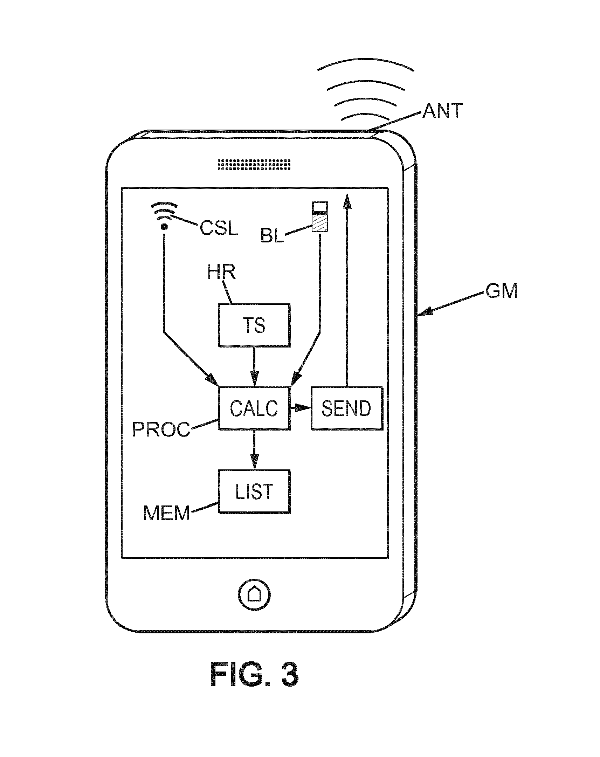

An example of terminal according to the invention is represented in figure 3 commented below and comprising a memory unit referenced MEM and a calculation unit referenced PROC.

The present invention is illustrated by way of example, and not by way of limitation, in the figures of the accompanying drawings, in which like reference numerals refer to similar elements and in which:
- Figure 1 represents a group of terminals connected through a local area network,
- Figure 2 is a flow chart including steps of the method according to an embodiment of the invention,
- Figure 3 shows a terminal for performing the method according to an embodiment of the invention.

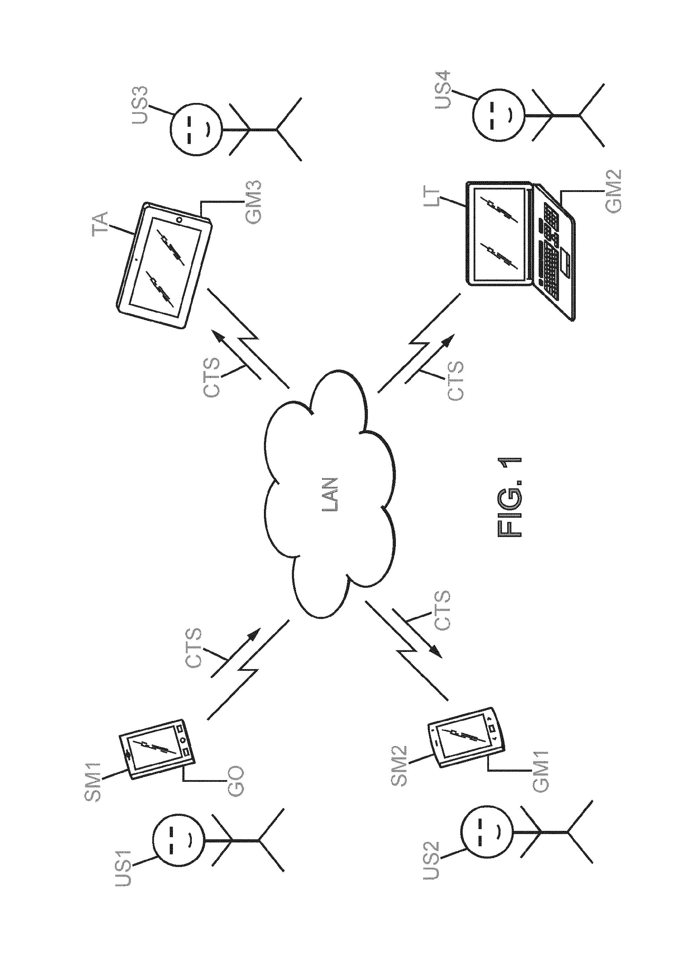

With reference to figure 1, according to a possible application of the present invention, a group of users US1, US2, US3, US4, each having a terminal (such as the smartphone SM1, SM2, a mobile phone MP, a tablet TA, a laptop LT) wish to interact together (for example for sharing contents CTS) without the need of an external network (such as the internet), and without need therefore of any access to that external network, nor any related infrastructure.

It is thus advantageous to create a wireless ad-hoc local network LAN. That network is an ad-hoc network, within the meaning of a network without any infrastructure.

For establishing that kind of network, usually, one terminal of the group of terminals offers a point of access to the other terminals of the group.

Furthermore, usually (but not necessarily), the terminal which acts as an access point (called "group owner" GO) for the other terminals (called "group members" GM1, GM2, GM3) is the first one which intends to send a content.

Therefore, the terminal GO initiates the network LAN as presented hereafter with reference to figure 2.

To that end, the user US1 of the terminal GO defines a password (which can be a string of characters, or a gesture as described in the application EP12306455 filed in the name of the same applicant), for entering the network LAN, in step S1 of figure 2.

In step S2, the terminal GO is defined as access point and stores the password entered by the user so as to check whether a password communicated by a terminal GM1, GM2 or GM3 corresponds to the password defined by user US1 (test of step S4 hereafter). In fact, as the network is set to work with short range radiofrequency waves (wifi, bluetooth, etc.), the users are deemed to be close one to each other so that user US1 can tell orally to the other users US2, US3, US4, the password to enter for connecting their terminal GM1, GM2, GM3 to the network.

In step S3, the terminals SM2, TA, LT, ..., willing to receive a content proposed by terminal GO, send a request of connection to terminal GO and terminal GO accepts or refuses to give them access to the network LAN to that end. Furthermore, terminal GO checks a password for connection sent by each terminal willing to join the network in step S4.

Therefore, after step S4, if the sent passwords are correct, each terminal GM1, GM2, GM3 connects to terminal GO to join the network and can thus share or exchange information (for example contents) between each other.

However, the terminal GO may unexpectedly leave the network (because of, for example, a power off due to an insufficient battery level, or if the current application crashes, or simply if the terminal GO leaves the network because, for example, its user US1 leaves physically the room where the terminals are being connected through a short wave range network). The other members of the group GM1, GM2, GM3 will then lose the connection to the network. In other words, the network is lost and the other terminals GM1, GM2, GM3 cannot continue to share/exchange data.

The remaining group members must recreate a network.

Usually, a trade-off between the remaining terminals is performed so as to determine which terminal can act as an access point.

The present invention involves an easier and simpler solution.

To that end, referring to figure 2, a list of terminals connected to the network is ranked according to at least one predetermined criterion. Each terminal stores and updates that list in step S5 (according to terminals which newly enter or leave the network).

The list gives, on the top of it, which terminal is being the access point to the network (in the example of embodiment shown in figure 2), and more particularly, which terminal GM1 can be designated as a new access point at least in case of disconnection from the network of the current access point GO (the terminal GM1 appearing thus as second in the list shown in figure 2). Of course, in a variant, the list may contain only the terminals which can be future candidates for being the access point GM1, GM2, ... (i.e. the current access point GO being removed from it).

Therefore, in step S6, in case of disconnection of the current access point GO (arrow KO from test S6), the terminal GM1 following immediately the access point GO in the list is defined as the new access point in the network in step S7, and the list is updated in step S8 by removing from it the former access point GO (or by removing the new access point and leaving the next terminal GM2 at the top of the list in the variant embodiment described above).

After that step, if a new terminal requests a connection to the new access point, the new access point GM1 is able to check whether the password sent is correct (in step S4) since the terminal GM1 could store the right password for being connected to the network LAN. Moreover, its user US2 knows also the password and can give it orally to the user of the new terminal.

The invention therefore proposes a backup list indicating a hierarchy of possible future access point in case of failure of connection of the current access point. That list is distributed among the connected terminals and is equally the same from one terminal to the other since a same computer program can run on each terminal to build that list.

The list is thus locally managed by each terminal in order to handle the transition to a new terminal GO as access point:
- each terminal GM checks if it is the expected terminal GO substitute (running for example an applicative layer software);
- the terminal GM which is the expected terminal GO substitute becomes the access point GO;
- the other terminals GM reconnect to the newly defined terminal GO and thus the network is recovered.

According to an advantage of the present invention, the network is not lost when the terminal GO leaves the network. The invention implements preferably a distributed solution so that the terminal GO leaving the network does not have to inform each terminal GM of which terminal becomes the new access point before leaving the network.

Examples of criterion or combined criteria for ranking the list are described hereafter.

The considered criterion or combined criteria must lead to a unique substitute point of access in the list (i.e. must avoid several candidates to be appointed as the substitute access point). Any criterion respecting this condition can be chosen therefore.

As an example of implementation, the lowest IP address can be used as a ranking criterion (i.e. the group member having the lowest IP address can be the substitute access point).

All group members periodically share their profile information (including the IP address) on the network LAN. For example, the ranked list of the terminals in the group can include:
- terminal GO : access point with IP address = 192.168.43.1
- terminal GM1 : profile 1 with IP address = 192.168.43.3
- terminal GM2 : profile 2 with IP address = 192.168.43.7
- terminal GM3 : profile 3 with IP address = 192.168.43.12
- etc.

Each terminal updates its own context list from information received from the other group members and from its own profile information.

When the terminal GO leaves, each group member checks whether it has the lowest IP address or not (withdrawing from the list the left terminal GO). If the answer is yes, this member (member GM1 in the example above) appoints itself as the substitute access point so as to provide access to the network.

Other criteria such as the rank number of a member when joining the group, or the battery level, or the received connection signal strength, etc., or a combination of such criteria could be used.

Referring to figure 3, a terminal GM according to the present invention comprises a battery level indicator BL, as well as a connection signal strength indicator CSL. In the example shown on figure 3, the terminal further comprises a clock counter HR for determining the duration of its connection to the network LAN (e.g. the time spent on the network with a same IP address so as to determine a rank number of that terminal joining the network). An example of combination of those three criteria can be thus defined as follows:
- rank the list of the connected terminals according to the time spent on the network (so as to hierarchy a knowledge of their users about a history of the contents previously exchanged within a same network session);
- among that list, select, for example, the first three ones having the highest battery level (so as to avoid an unexpected disconnection of a possible future access point);
- rank those three ones according to a connection signal strength (so as to ensure an efficient communication of a possible future point of access to the network)
- the other remaining terminals being let at the end of the list.

Of course, such a combination of criteria is performed by each terminal of the group. Therefore, a same computer application runs to that end on each terminal. However, in the case where several versions of that application can be implemented by different terminals of the group, one of the aforesaid parameters exchanged between the terminals of the group can be the number of the version of the computer application which can run on a terminal. In case of detection of several different versions in the group of terminals, it can be decided for example to use altogether the oldest version, or to use a reduced number of criteria to combine, or to use a single criterion (such as for example the battery level, or any other criterion given above by way of example).

Those steps of definition of combined criteria and for building the list can be performed by a processor PROC for calculating the ranked list and to store it in a memory MEM (for example a RAM memory). Moreover, the processor can interpret the signals coming from the clock HR, from the battery level and the connection signal strength indicators BL, CSL, and send relative information to the other terminals of the group (through an antenna ANT in the example of figure 3).

The present invention can also be embedded in a computer program product, which comprises all the features enabling the implementation of the methods described herein, and which, when loaded in an information processing system (for example in a terminal), causes the information processing system to perform the method of the invention. Computer program means or computer program in the present context mean any expression, in any language, code or notation, of a set of instructions intended to cause a system having an information processing capability to perform a particular function either directly or after the conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information. Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method for maintaining a local area network between several terminals, a first terminal acting as a point of access to said network for the other terminals, wherein a list of terminals which are connected to said network is ordered according to at least one predetermined criterion, and wherein, at least in case of disconnection of said first terminal from the network, said first terminal is withdrawn from the list and the remaining terminal on top of the list is defined as the new access point to said network.

2. The method according to claim 1, comprising the steps, performed at a second terminal connected to said access point, of:
- at least in case of disconnection of the access point from the network, determining whether said second terminal is on the top of the list,
- and:
• if it is, recovering said network with said second terminal as new access point,
• if it is not, connecting to the terminal on the top of the list as new access point to the network.

3. The method according to any of claims 1 and 2, comprising the steps, performed at each terminal, of:
• receiving from each terminal at least one parameter value,
• ordering said list of terminals on the basis of the received parameter values,
• storing said list, and,
• at least in case of a disconnection of a terminal and/or a connection of a new terminal in said network, updating said list.

4. The method of claim 1, comprising a step of initiating the network comprising the operations, performed at each current terminal, of:
- determining whether said current terminal is on the top of the list, and:
• if it is, initiating a network with said current terminal as access point,
• if it is not, connecting to the terminal which is on the top of the list as access point to the network.

5. The method of claim 4, wherein said step of initiating the network comprises the operations, performed at each current terminal, of:
• receiving from each terminal at least one parameter value,
• ordering said list of terminals on the basis of the received parameter values,
• and storing said list.

6. The method according to any of the preceding claims, wherein said predetermined criterion takes into account a time spent by the terminal being connected to the network.

7. The method according to any of the preceding claims, wherein said predetermined criterion takes into account a battery level of the terminal being connected to the network.

8. The method according to any of the preceding claims, wherein said predetermined criterion takes into account a signal strength of connection of the terminal to the network.

9. The method according to any of the preceding claims, wherein said predetermined criterion takes into account an IP address value of the terminal being connected to the network.

10. The method according to any of the preceding claims, comprising a step of updating repetitively said list, and designating repetitively the terminal currently at the top of the list as new access point.

11. The method according to any of the preceding claims, wherein, for a connection of a current terminal to said network, the access point verifies a password sent from the current terminal.

12. Computer program comprising instructions for the implementation of the method according to any of the preceding claims, when read by a processor.

13. A terminal, intended to be connected to a local area network where a first terminal is a point of access to the network for other terminals,
comprising:
- a unit for storing a list of terminals connected to said network and ranked according to at least one predetermined criterion, and
- a calculation unit adapted for, at least in case of disconnection of said access point from the network, withdrawing the first terminal from the list and for defining the remaining terminal on top of the list as the new access point in said network.
